# EUROPEAN PATENT APPLICATION

(11) **EP 3 962 048 A1**
(43) Date of publication of application: **02.03.2022**
(21) Application number: 19926210.6
(22) Date of filing: 26.04.2019
(51) Int. Cl.: H04M 1/725

(54) **VOICE BROADCASTING CONTROL METHOD AND APPARATUS, STORAGE MEDIUM, AND ELECTRONIC DEVICE**

(71) Applicant: SHENZHEN HEYTAP TECHNOLOGY CORP., LTD., Shenzhen, Guangdong 518057 (CN); GUANGDONG OPPO MOBILE TELECOMMUNICATIONS CORP., LTD., Dongguan, Guangdong 523860 (CN)
(72) Inventor: GUO, Ziliang, Dongguan, Guangdong 523860 (CN)
(74) Representative: Thorniley, Peter
(86) International application number: PCT/CN2019/084599
(87) International publication number: WO 2020/215321

(57) **Abstract**

Disclosed in the embodiments of the present application are a voice broadcasting control method and apparatus, a storage medium and an electronic device. The control method comprises: acquiring current state information when it is detected that a voice assistant is started; generating a corresponding target control instruction when it is detected that the state information is preset state information; and executing the target control instruction to perform corresponding control on the voice broadcasting of the voice assistant. The present invention improves the control efficiency of voice broadcasting.

## Description

### FIELD OF THE DISCLOSURE

The present disclosure relates to an electronic device technology, and more particularly, to a voice broadcasting control method, a device, a storage medium, and an electronic device.

### BACKGROUND

As the progress of the electronic technologies, the electronic devices, such as cell phones, become more and more useful. In a cell phone, a varies of applications, such as a voice assistant, could be installed to meet the users' demands. The voice assistant is an application in a smart phone and could be used as a user interface between the user and the cell phone to quickly solve users' problems.

Conventionally, after the user activates the voice assistant, the voice assistant reports the corresponding voice information to remind the user to input voice commands such that the cell phone could perform corresponding operation according to the voice commands. However, regardless of the volume state of the cell phone, the voice assistant will perform the voice broadcast. This introduces some inconveniences to the users.

### SUMMARY

One objective of an embodiment of the present disclosure is to provide a voice broadcast control method, a device, a storage medium and an electronic device, in order to raise the control efficiency of the voice broadcast.

According to an embodiment of the present disclosure, A method of controlling voice broadcast is disclosed. The method includes: obtaining a current state information in response to an activation of a voice assistant, generating a target control command in response to the current state information being a predetermined state information, and executing the target control command to control a voice broadcast of the voice assistant.

According to an embodiment of the present disclosure, a voice broadcast control device is disclosed. The voice broadcast control device includes an obtaining unit, a generating unit, and a control unit. The obtaining unit is configured to obtain a current state information in response to an activation of a voice assistant. The generating unit is configured to generate a target control command in response to the current state information being a predetermined state information. The control unit is configured to execute the target control command to control a voice broadcast of the voice assistant.

According to an embodiment of the present disclosure, a storage medium is disclosed. The storage medium stores computer procedures. The computer procedures are executed by a processor such that the processor performs the voice broadcast control method of any of the embodiments of the present disclosure.

According to an embodiment of the present disclosure, an electronic device is disclosed. The electronic device includes a memory storing computer procedures, and a processor configured to execute the computer procedures to perform operations. The operations include: obtaining a current state information in response to an activation of a voice assistant, generating a target control command in response to the current state information being a predetermined state information, and executing the target control command to control a voice broadcast of the voice assistant.

### BRIEF DESCRIPTION OF THE DRAWINGS

**To** describe the technical solutions in the embodiments of this application more clearly, the following briefly introduces the accompanying drawings required for describing the embodiments. Apparently, the accompanying drawings in the following description show merely some embodiments of this application, and a person of ordinary skill in the art may still derive other drawings from these accompanying drawings without creative efforts.
Fig. 1 is a flow chart of a voice broadcast control method according to an embodiment of the present disclosure.
Fig. 2 is a flow chart of a voice broadcast control method according to another embodiment of the present disclosure.
Fig. 3 is a diagram of a scene of a voice broadcast control method according to an embodiment of the present disclosure.
Fig. 4 is a diagram of another scene of a voice broadcast control method according to an embodiment of the present disclosure.
Fig. 5 is a block diagram of a voice broadcast control device according to an embodiment of the present disclosure.
Fig. 6 is a block diagram of a voice broadcast control device according to another embodiment of the present disclosure.
Fig. 7 is a diagram of an electronic device according to an embodiment of the present disclosure.
Fig. 8 is a diagram of an electronic device according to another embodiment of the present disclosure.

### DETAILED DESCRIPTION

Please refer to the drawings, in which the same reference signs represent the same components, and the principle of the present disclosure is implemented in an appropriate computing environment for illustration. The following description is based on the exemplified specific embodiments of the application, which should not be regarded as limiting other specific embodiments of the application that are not described in detail herein.

**The** term "module" used herein can be regarded as a software object executed on the computing system. The different components, modules, engines and services mentioned in this description can be regarded as the implementation objects on the computing system. The device and method described herein are preferably implemented in the form of software, of course, they can also be implemented on hardware, and they all fall within the scope of the present disclosure.

According to an embodiment, a voice broadcast control method is disclosed. The device for performing the voice broadcast control method could be a voice broadcast control device according to an embodiment. Here, the voice broadcast control method could be implemented by hardware or software. The electronic device could be a smart phone, a tablet, a personal digital assistant, and etc.

Embodiments of the present disclosure are detailed in the following paragraphs.

An embodiment of the present disclosure proposes a method of controlling voice broadcast, comprising:
obtaining a current state information in response to an activation of a voice assistant;
generating a target control command in response to the current state information being a predetermined state information; and
executing the target control command to control a voice broadcast of the voice assistant.

In another embodiment, the obtaining the current state information comprises: detecting whether an audio equipment is connected; in response to the audio equipment being connected, determining the current state information according to a volume information of the audio equipment; and in response to the audio equipment not connected, determining the current state information according to a volume information of an electronic device.

In another embodiment, the obtaining the current state information comprises: collecting a current ambient characteristic information, and determining a scene information according to the current ambient characteristic information and determining the current state information according to the scene information.

In another embodiment, the ambient characteristic information comprises a position characteristic information and a time characteristic information. The determining the scene information according to the current ambient characteristic information comprises: determining a position range according to the position characteristic information; determining a corresponding time range according to the time characteristic information; and determining the scene information according to the position range and the time range.

In another embodiment, the executing the target control command to control the voice broadcast of the voice assistant comprises: in response to the audio equipment being connected, executing the target control command to perform a mute control on the voice broadcast of the voice assistant corresponding to the audio equipment; and in response to the audio equipment not connected, executing the target control command to perform a mute control on the voice broadcast of the voice assistant corresponding to the electronic device.

In another embodiment, the executing the target control command to perform the mute control on the voice broadcast of the voice assistant corresponding to the audio equipment comprises: detecting whether a current state is a handheld state; in response to the current state being the handheld state, executing the target control command to perform the mute control on the voice broadcast of the voice assistant corresponding to the audio equipment; and in response to the current state not the handheld state, executing the target control command to perform the mute control on the voice broadcast of the voice assistant corresponding to the audio equipment and turning on the voice broadcast of the voice assistant corresponding to the audio equipment.

In another embodiment, the method further comprises: canceling the control on the voice broadcast of the voice assistant in response to a default operation command.

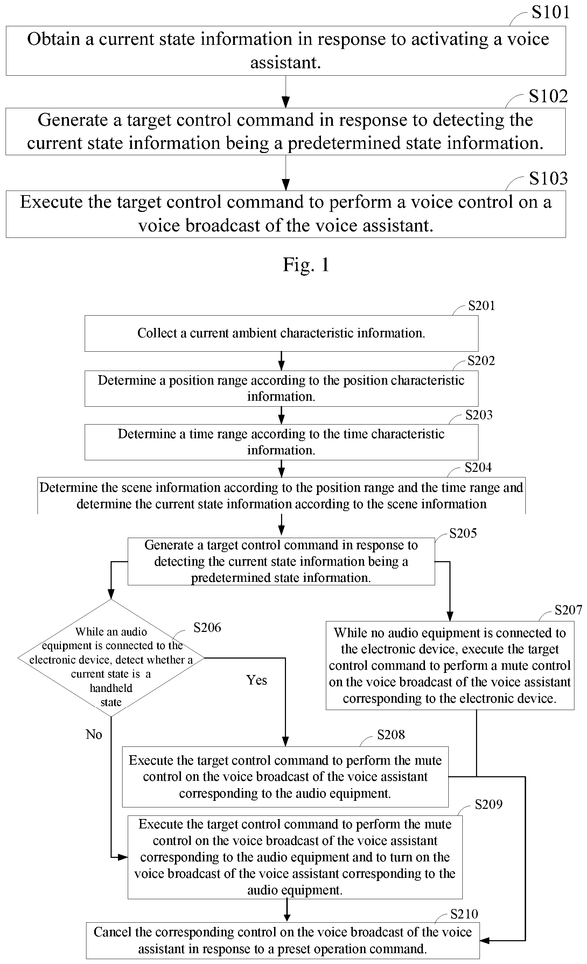

Please refer to Fig. 1. Fig. 1 is a flow chart of a voice broadcast control method according to an embodiment of the present disclosure. The voice broadcast control method comprises following steps:
Block S101: obtaining a current state information when an activation of a voice assistant is detected.

The voice assistant is a smart terminal application, which could communicate with the user through a smart conversation and an instant Q&A to solve users' problems. Especially, the voice assistant could help user solve life issues. For example, after the user activates the voice assistant, the user could input voice information "open XX application" and then the voice assistant could quickly open the XX application according to the voice information. This could ease the user experience. However, the conventional voice assistant still perform the voice broadcast regardless which volume state the electronic device is in (even it is in a mute state). This may bother the user and ruin the user experiences.

In this embodiment, when an activation of a voice assistant is detected, the current state information of the electronic device is obtained. The state information could be a mute state information or a non-mute state information. In an embodiment, the volume channel of the electronic device could be used to determine the current state information. In another embodiment, the current state information could be determined through the current scene information. The scene information could be a work scene or an entertainment scene.

The block S101 could comprise: (1) detecting whether an audio equipment is connected; (2) in response to the audio equipment being connected, determining the current state information according to a volume information of the audio equipment; and (3) in response to the audio equipment not connected, determining the current state information according to a volume information of an electronic device.

The audio equipment is a name of audio input/output equipments, which include various products types, such as a power amplifier, a speaker, an earphone, a Bluetooth earphone and etc. The electronic device often has two volume channels, the first volume channel and the second volume channel. The first volume channel is for the electronic device and could be increased or reduced through a predetermined button. The second volume channel is for an audio equipment and is turned on when an audio equipment is connected to the electronic device. The second volume channel could be increased or reduced through a predetermined button of the electronic device or through a predetermined button of the audio equipment.

Therefore, according to different conditions, the state information needs to be correspondingly determined. That is, when the activation of the voice assistant is detected, the electronic device determines whether if there is an audio equipment connected to the electronic device. If the electronic device determines there is an audio equipment connected to the electronic device, the current state information is determined according to the second volume channel of the audio equipment. When the second audio channel is 0, the state information represents a mute state. When the second audio channel is not 0, the state information represents a non-mute state.

If the electronic device determines there is no audio equipment connected to the electronic device, the current state information is determined according to the first volume channel of the electronic device. When the first audio channel is 0, the state information represents a mute state. When the first audio channel is not 0, the state information represents a non-mute state.

Block S102: generate a target control command when the current state information is a predetermined state information.

The target control command is used to control the voice broadcast of the voice assistant to be in the mute state. The predetermined state information is the mute state. When the state information in block S101 is in the mute state, it means that the voice broadcast of the voice assistant needs be controlled in the mute state as well. Therefore, a target control command is generated.

Block S103: execute the target control command to perform a corresponding control on a voice broadcast of the voice assistant.

In this embodiment, the target control command could be executed to perform the corresponding mute control on the voice broadcast of the voice assistant. In this way, the voice assistant may only display the message on the screen of the electronic device without voice broadcast in the voice channel when the voice assistant is working. Accordingly, the user will not be bothered by the voice broadcast.

For example, after the user turns on the voice assistant in the office, the user may not want to be bothered by the voice broadcast because the user's privacy might be revealed. However, the conventional voice assistant still performs the voice broadcast even if the user turns off the voice channel of the electronic device. Therefore, it's inconvenient for the user. In this embodiment, when the user turns off the voice channel, the voice assistant will not perform the voice broadcast. It's more convenient for the user and could prevent from revealing the user's privacy.

The block S103 could further comprises: (1) if an audio equipment is detected to be connected, executing the target control command to perform a mute control on the voice broadcast of the voice assistant corresponding to the audio equipment; and (2) if no audio equipment is detected to be connected, executing the target control command to perform a mute control on the voice broadcast of the voice assistant corresponding to the electronic device.

Because the electronic device may be connected or not connected to an audio equipment, the electronic device needs to detect whether if an audio equipment is connected before performing any corresponding control process on the voice broadcast of the voice assistant. If the electronic device detects that an audio equipment is connected, the electronic device performs a mute control on the voice broadcast of the voice assistant corresponding to the audio equipment such that the audio equipment (such as an earphone) does not play the voice broadcast of the voice assistant. If the electronic device detects that no audio equipment is connected, the electronic device performs a mute control on the voice broadcast of the voice assistant corresponding to the electronic device such that the electronic device does not play the voice broadcast of the voice assistant.

The step of executing the target control command to perform the mute control on the voice broadcast of the voice assistant corresponding to the audio equipment could comprise: (1.1) detecting whether a current state is a handheld state; (1.2) in response to the current state being the handheld state, executing the target control command to perform the mute control on the voice broadcast of the voice assistant corresponding to the audio equipment; and (1.3) in response to the current state not the handheld state, executing the target control command to perform the mute control on the voice broadcast of the voice assistant corresponding to the audio equipment and turning on the voice broadcast of the voice assistant corresponding to the audio equipment.

In this embodiment, the voice assistant could be used to search for the electronic device. That is, if the user does not remember where the electronic device is, the user could determine the position of the electronic device by awaking the voice assistant to perform the voice broadcast. The handheld state is the state when the user holds the electronic device. The handheld state could be determined by using the sensor to sense when the user is close to the sensor or by signal amplitude of each of the antennas of the electronic device. These changes all fall within the scope of the present disclosure.

Therefore, when the electronic device determines that an audio equipment is connected, the electronic device needs to detect whether the electronic device is in the handheld state. If the electronic device is in the handheld state, it means that the user does not need to search for the electronic device so the electronic device could directly execute the target control command to perform the mute control on the voice broadcast of the voice assistant of the audio equipment. If the electronic device is not in the handheld state, it means that user needs to search for the electronic device so the electronic device could execute the mute control on the voice broadcast of the voice assistant of the audio equipment but turn on the voice broadcast of the voice assistant of the electronic device. That is, even if an audio equipment is connected to the electronic device, electronic device could also use the power amplifier of the electronic device to play the voice broadcast of the voice assistant such that the user could find the position of the electronic device according to the voice.

From the above, the voice broadcast control method of this embodiment obtains a current state information when an activation of a voice assistant is detected, generates a target control command when the current state information is a predetermined state information; and executes the target control command to perform a corresponding control on a voice broadcast of the voice assistant. In this way, when the voice assistant is activated, a corresponding control could be performed on the voice broadcast of the voice assistant according to the state information of the electronic device. This achieves the smart control of the voice broadcast and raises the control efficiency of the voice broadcast.

According to the control method described above, another example will be illustrated in the following disclosure.

Please refer to Fig. 2. Fig. 2 is a flow chart of a voice broadcast control method according to another embodiment of the present disclosure. The voice broadcast control method:
Block S201: collecting a current ambient characteristic information.

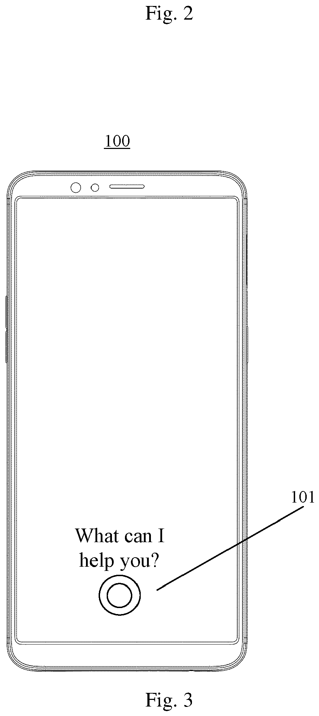

As previously mentioned, the conventional voice assistant performs the voice broadcast no matter what volume state (even the mute state) the electronic device is in. For example, the voice assistant may perform the voice broadcast "what can I help you?" As shown in Fig. 3, after the voice assistant is activated, the electronic device 100 will display the text "what can I help you?" on the screen and perform the voice broadcast. But in a specific scene, such as the office, the user may not want the voice assistant 101 to perform the voice broadcast to avoid revealing the user's privacy.

Therefore, when the electronic device detects that the voice assistant is activated, the current ambient characteristic information is collected. The current ambient characteristic information is a corresponding multi-dimensional information corresponding to the scene, such as the time characteristic information and position characteristic information. The time characteristic information represents the current time, such as 17:20 PM, Thursday. The position characteristic information represents the position information collected by the global positioning system (GPS), such as the X building.

Block S202: determining a position range according to the position characteristic information.

The user could preset multiple position ranges, such as a working position range and a living position range. The position range could be a rectangular box or a round box, which includes a map information within a certain range. The position range could be generated according to the user's habit or could be defined by the user. The generation method is not a limitation here. Therefore, the position range could be determined according to the position characteristic information. For example, if the X building is within the working position range, then the position range is determined to the working position range according to the position characteristic information.

Block S203: determining a corresponding time range according to the time characteristic information.

The user could preset multiple time ranges, such as a working time range and an entertainment time range. The working time range could be from 9 AM to 17:30 PM during workdays. The entertainment time range could be the time range other than the working time range. The time ranges could be generated according to the regulations of the currently-located country or could be defined by the user. The generation method is not a limitation here. Therefore, the time range could be determined according to the time characteristic information. For example, 17:20 PM, Thursday is within the working time range, then the time range is determined to the working time range according to the time characteristic information.

Block S204: determining the scene information according to the position range and the time range and determining the current state information according to the scene information.

According to the position range and the time range, the scene information could be determined. For example, if the position range is the working position range and the time range is the working time range, then the scene information could be determined to be the working scene.

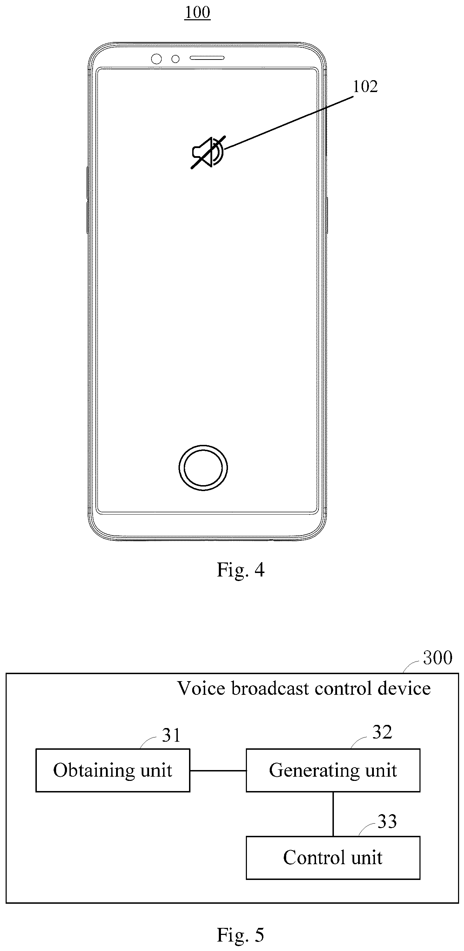

Furthermore, different scene information could be bonded with different state information. For example, the working scene is bonded with the mute state and the entertainment scene is bonded with the non-mute state. Or, different scene information could be bonded with different state information according to the actual needs of the user. Therefore, the bonding relationship could be determined according to the working scene such that the state information corresponding to the working scene could be determined to the mute state. As shown in Fig. 4, when the current scene information is determined to be the working scene, the volume channel 102 of the electronic device 100 is set as the mute state.

Block S205: generating a target control command when the current state information is a predetermined state information.

The predetermined state information is the mute state. Because the current state information is the mute state, the detected state information is determined to be the predetermined state information and thus the target control command is generated. The target control command is used to control the voice broadcast in the mute state.

Block S206: if an audio equipment is detected to be connected, detecting whether a current state is a handheld state.

The electronic device could be connected to an audio equipment, such as an earphone and/or a speaker. When no audio equipment is connected, the voice broadcast of the voice assistant is played through the speaker of the electronic device. When an audio equipment is connected, the voice broadcast of the voice assistant is played through the speaker of the audio equipment. Therefore, the electronic device needs to determine whether an audio equipment is connected when a process is performed on the voice broadcast of the voice assistant. When an electronic device is connected, then the block S206 is performed to detect whether the electronic device is in the handheld state. If the electronic device is detected to be in the handheld state, then the block S208 is performed. If the electronic device is detected not to be in the handheld state, then the block S209 is performed. If no external equipment is detected to be connected, then the block S207 is performed.

Block S207: if no audio equipment is detected to be connected, executing the target control command to perform a mute control on the voice broadcast of the voice assistant corresponding to the electronic device.

When no audio equipment is detected to be connected, it means that the electronic device could only play the voice broadcast through the speaker of the electronic device. In this case, the electronic device could execute the target control command to perform the mute control on the voice broadcast of the voice assistant of the electronic device such that the voice assistant operates only in the electronic device without making any sound. For example, if the user is in the office (the working scene) and the user turns on the voice assistant and input the voice information "begin the meeting," the voice assistant will operate in the electronic device and set the working mode of the electronic device as "meeting mode" according to the voice information "begin the meeting." In addition, the voice assistant will display "set as the meeting mode" and the electronic device executes the target control command to perform the mute control on the voice broadcast of the voice assistant of the electronic device. In this way, no sound is made. This is more convenient to the user and avoids revealing the user's privacy.

Block S208: executing the target control command to perform the mute control on the voice broadcast of the voice assistant corresponding to the audio equipment.

When the user cannot find the electronic device, the user could say a specific voice information, such as "where are you, Tom?" to awake the voice assistant and the voice assistant performs the voice broadcast "I am here, sir." Accordingly, the user could find the electronic device according to the voice broadcast of the electronic device.

When there is an audio equipment connected to the electronic device, the voice broadcast of the voice assistant will be outputted through the audio equipment to affect the user's determination about the position of the electronic device. Therefore, the electronic device needs to check whether the electronic device is in the handheld state to determine whether the user needs to find the electronic device. If the electronic device is in the handheld state, it means that the user knows where the electronic device is and there is no need to perform the voice broadcast. Accordingly, the electronic device executes the target control command to perform the mute control on the voice broadcast of the voice assistant of the voice equipment such that the voice assistant merely display a message on the screen without making any sound.

Block S209: executing the target control command to perform the mute control on the voice broadcast of the voice assistant corresponding to the audio equipment and turning on the voice broadcast of the voice assistant corresponding to the audio equipment.

If the electronic device is detected to not be in the handheld state, it means that the user may not know where the electronic device is. Accordingly, in order to make it easier for the user to find the electronic device, the electronic device could receive a default command, such as "where are you, Tom?" After receiving the default command inputted by the user, the electronic device executes the target control command to perform the mute control on the voice broadcast of the voice assistant of the audio equipment such that the audio equipment does not generate a sound of voice broadcast of the voice assistant. But the voice assistant of the electronic device could still make a sound to inform the user such that the user could find the electronic device according to the sound made by the voice broadcast of the electronic device. Therefore, the electronic device is more convenient for the user.

Block S210: canceling the corresponding control on the voice broadcast of the voice assistant if a default operation command is detected.

The default command could be executed through one click or double clicks on the button of the electronic device, double clicks on the display screen, a slide on a certain track, or an input of a predetermined voice instruction, such as "unmute." After the electronic device receives the default operation command, the electronic device cancels the mute control on the voice broadcast of the voice assistant. That is, the user could cancel the mute control on the voice broadcast of the voice assistant anytime. This makes the electronic device flexible.

The voice broadcast control method of this embodiment collects the ambient characteristic information when the activation of the voice assistant is detected, determine the mute state/non-mute state according to the scene information, and generate a target control command to set the voice broadcast of the voice assistant be in the mute state when the electronic device is in the mute state. In this way, when the voice assistant is activated, the electronic device could perform a corresponding control on the voice broadcast of the voice assistant such that the smart control on the voice broadcast is achieved and the control efficiency on the voice broadcast is raised.

To facilitate better implementation of the voice broadcast control method provided in the embodiments of the present disclosure, an embodiment of the present disclosure also provides a voice broadcast control device based on the above-mentioned voice broadcast control method. The meanings of the nouns are the same as those in the above-mentioned voice broadcast control method, and the specific implementation details can refer to the description in the method embodiment.

According to the embodiment of the present disclosure, a voice broadcast control device includes an obtaining unit, a generating unit and a control unit. The obtaining unit is configured to obtain a current state information in response to an activation of a voice assistant. The generating unit is configured to generate a target control command in response to the current state information being a predetermined state information. The control unit is configured to execute the target control command to control a voice broadcast of the voice assistant.

In another embodiment, the obtaining unit is further configured to: detect whether an audio equipment is connected; determine the current state information according to a volume information of the audio equipment in response to the audio equipment being connected; and determine the current state information according to a volume information of an electronic device in response to the audio equipment not connected.

In another embodiment, the obtaining unit is further configured to: collect a current ambient characteristic information; and determine a scene information according to the current ambient characteristic information and determine the current state information according to the scene information.

In another embodiment, the ambient characteristic information comprises a position characteristic information and a time characteristic information. The obtaining unit is further configured to: determine a position range according to the position characteristic information; determine a corresponding time range according to the time characteristic information; and determine the scene information according to the position range and the time range.

In another embodiment, the control unit comprises a first control sub-unit and a second control sub-unit. The first control sub-unit is configured to execute the target control command to perform a mute control on the voice broadcast of the voice assistant corresponding to the audio equipment in response to the audio equipment being connected. The second control sub-unit is configured to execute the target control command to perform a mute control on the voice broadcast of the voice assistant corresponding to the electronic device in response to the audio equipment not connected.

Please refer to Fig. 5. Fig. 5 is a block diagram of a voice broadcast control device according to an embodiment of the present disclosure. The voice broadcast control device 300 comprises an obtaining unit 31, a generating unit 32 and a control unit 33.

The obtaining unit 31 is configured to obtain a current state information when an activation of a voice assistant is detected.

The obtaining unit could obtain the current state information of the electronic device when the voice assistant is activated. The state information could be a mute state information and a non-mute state information. In an embodiment, the obtaining unit 31 could determine the current state information through the volume channel of the electronic device. In another embodiment, the obtaining unit 31 could determine the corresponding state information through the current scene information. The scene information could be a working scene or an entertainment scene.

The obtaining unit 31 is further configured to detect whether an audio equipment is connected, determine the current state information according to a volume information of the audio equipment in response to the audio equipment being connected, and determine the current state information according to a volume information of an electronic device in response to the audio equipment not connected.

The obtaining unit 31 is further configured to collect the ambient characteristic information, determine a scene information according to the ambient characteristic information, and determine the current state information according to the scene information.

The obtaining unit 31 is further configured to collect the ambient characteristic information, determine a position range according to the ambient characteristic information, determine a time range according to the ambient characteristic information, determine the scene information according to the position range and the time range, and determine the current state information according to the scene information.

The generating unit 32 is configured to generate a target control command when the current state information is a predetermined state information.

The target control command is used to control the voice broadcast of the voice assistant to be in the mute state. The predetermined state information is the mute state. When the generating unit 32 detects that the state information in the previous step is the mute state, it means that the voice broadcast of the voice assistant needs to be controlled to be in the mute state and thus the target control command is generated.

The control unit 33 is configured to execute the target control command to perform a corresponding control on a voice broadcast of the voice assistant.

The control unit 33 could execute the target control command to perform a corresponding control on the voice broadcast of the voice assistant such that the message is merely displayed on the screen of the electronic device without performing the voice broadcast in the voice channel under the condition that the voice assistant is operating such that the user is not bothered.

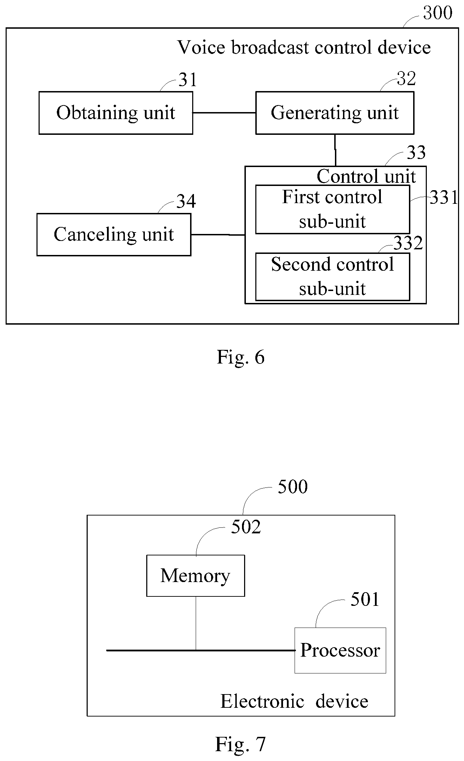

Please refer to Fig. 6. Fig. 6 is a block diagram of a voice broadcast control device according to another embodiment of the present disclosure. In the voice broadcast control device 300, the control unit 33 could further comprise a first control sub-unit 331 and a second control sub-unit 332.

The first control sub-unit 331 is configured to execute the target control command to perform a mute control on the voice broadcast of the voice assistant corresponding to an audio equipment in response to the audio equipment being connected. The second control sub-unit 332 is configured to execute the target control command to perform a mute control on the voice broadcast of the voice assistant corresponding to the electronic device if no audio equipment is detected to be connected.

The first control sub-unit 331 is further configured to detect whether the electronic device is in the handheld state when an external equipment is detected to be connected. When the first control sub-unit 331 detects that the electronic device is in the handheld state, the target control command is executed to perform a mute control on the voice broadcast of the voice assistant of the audio equipment. When the first control sub-unit 331 detects that the electronic device is not in the handheld state, the target control command is executed to perform a mute control on the voice broadcast of the voice assistant of the audio equipment and turn on the voice broadcast of the voice assistant of the electronic device.

The voice broadcast control device 300 further comprises a canceling unit 34. The canceling unit 34 is configured to cancel the corresponding control on the voice broadcast of the voice assistant if a default operation command is detected.

Please refer to Fig. 7. Fig. 7 is a diagram of an electronic device according to an embodiment of the present disclosure. The electronic device 500 comprises a processor 501 and a memory 502. The processor 501 is electrically connected to the memory.

The processor 500 is the control center of the electronic device 500. The processor 500 could be electrically connected to other parts of the electronic device through interfaces and buses. The processor 500 loads and executes the computer procedures stored in the memory 502 and loads the data stored in the memory 502 to perform the functions of the electronic device and process the data such that the electronic device 500 could be controlled.

The memory 502 could store the software programs and modules. The processor 501 executes the software programs and modules stored in the memory to perform all functions and data processing. The memory 502 could mainly comprise a program storage section and a data storage section. The program storage section could be used to store the operation system, the computer procedures for at least one function (such as the voice broadcast function or image display function). The data storage section could be used to store the data created according to the execution of the electronic device. In addition, the memory 502 could comprise a high speed random access memory. The memory 502 could comprise a non-volatile memory, such as a hard disk or a flash drive, and/or a volatile memory. In addition, the memory 502 could comprise a memory controller for the processor 501 to access the memory 502.

In an embodiment, the processor 501 of the electronic device 500 load one or more commands of the computer procedures into the memory 502 and executes the computer procedures stored in the memory 502 to perform operations comprising:
obtaining a current state information in response to an activation of a voice assistant;
generating a target control command in response to the current state information being a predetermined state information; and
executing the target control command to control a voice broadcast of the voice assistant.

In another embodiment, in response to obtaining the current state information, the processor 501 is further configured to execute the computer procedures to perform operations comprising:
detecting whether an audio equipment is connected;
in response to the audio equipment being connected, determining the current state information according to a volume information of the audio equipment; and
in response to the audio equipment not connected, determining the current state information according to a volume information of an electronic device.

In another embodiment, when obtaining the current state information, the processor 501 is further configured to execute the computer procedures to perform operations comprising:
collecting a current ambient characteristic information; and
determining a scene information according to the current ambient characteristic information and determining the current state information according to the scene information.

In another embodiment, when determining a scene information according to the current ambient characteristic information, the processor 501 is further configured to execute the computer procedures to perform operations comprising:
determining a position range according to the position characteristic information;
determining a corresponding time range according to the time characteristic information; and
**determining** the scene information according to the position range and the time range.

In another embodiment, when executing the target control command to control a voice broadcast of the voice assistant, the processor 501 is further configured to execute the computer procedures to perform operations comprising:
in response to the audio equipment being connected, executing the target control command to perform a mute control on the voice broadcast of the voice assistant corresponding to the audio equipment; and
in response to the audio equipment not connected, executing the target control command to perform a mute control on the voice broadcast of the voice assistant corresponding to the electronic device.

In another embodiment, when executing the target control command to perform the mute control on the voice broadcast of the voice assistant corresponding to the audio equipment, the processor 501 is further configured to execute the computer procedures to perform operations comprising:
detecting whether a current state is a handheld state;
in response to the current state being the handheld state, executing the target control command to perform the mute control on the voice broadcast of the voice assistant corresponding to the audio equipment; and
in response to the current state not the handheld state, executing the target control command to perform the mute control on the voice broadcast of the voice assistant corresponding to the audio equipment and turning on the voice broadcast of the voice assistant corresponding to the audio equipment.

In another embodiment, when executing the target control command to perform the mute control on the voice broadcast of the voice assistant corresponding to the audio equipment, the processor 501 is further configured to execute the computer procedures to perform operations comprising:
in response to a default operation command, canceling the control on the voice broadcast of the voice assistant.

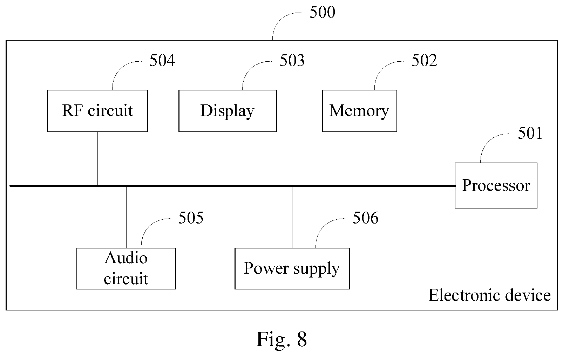

Please refer to Fig. 8. Fig. 8 is a diagram of an electronic device according to another embodiment of the present disclosure. The electronic device 500 further comprises a display 503, a radio frequency (RF) circuit 504, an audio circuit 505 and a power 506. The display 503, RF circuit 504, audio circuit 505 and power supply 506 are electrically connected to the processor 501.

The display 503 can be used to display information input by the user or information provided to the user, and various graphical user interfaces. These graphical user interfaces can be composed of graphics, text, icons, videos, and any combination thereof. The display 503 may include a display panel. In some embodiments, the display panel may be configured in the form of a liquid crystal display (LCD) or an organic light-emitting diode (OLED).

The RF circuit 504 can be used to establish wireless communication with network equipment or other electronic equipment, and to send and receive signals with the network equipment or other electronic equipment through wireless communication.

The audio circuit 505 can be used to provide an audio interface between the user and the electronic device through a speaker or a microphone.

The power supply 506 can be used to supply power to various components of the electronic device 500. In some embodiments, the power supply 506 may be logically connected to the processor 501 through a power management system, so that functions such as charging, discharging, and power consumption management can be managed through the power management system.

Although not shown in Fig. 8, the electronic device 500 may also include a camera, a Bluetooth module, which are omitted herein.

In addition, a storage medium is disclosed according to an embodiment of the present disclosure. The storage medium stores computer procedures. When the computer procedures are executed in a computer, the computer could perform the voice broadcast control method of any one of the above-mentioned embodiments. For example, the computer could execute computer procedures to obtain a current state information when an activation of a voice assistant is detected; generate a target control command when the current state information is a predetermined state information; and execute the target control command to perform a corresponding control on a voice broadcast of the voice assistant.

In the embodiment of the present disclosure, the storage medium may be a magnetic disk, an optical disk, a read only memory (Read Only Memory, ROM), or a random access memory (Random Access Memory, RAM), etc.

It could be understood by one having ordinary skills in the art that a part or the entire of the broadcast control method could be achieved by executing a software program to control related hardware components. The software program could be stored in the computer readable medium, such as a memory of an electronic device and executed by one or more processors of the electronic device to perform the above steps of the voice broadcast control method. The storage medium could be a hard disk, an optical disk, a read only memory, and/or a RAM.

**For** the voice broadcast control device of the embodiment of the present application, its functional modules may be integrated in one processing chip, or each module may exist alone physically, or two or more modules may be integrated in one module. The above-mentioned integrated modules can be implemented in the form of hardware or software functional modules. If the integrated module is implemented in the form of a software function module and sold or used as an independent product, it can also be stored in a computer readable storage medium, such as a read-only memory, a magnetic disk, or an optical disk.

Above are embodiments of the present disclosure, which does not limit the scope of the present disclosure. Any modifications, equivalent replacements or improvements within the spirit and principles of the embodiment described above should be covered by the protected scope of the disclosure.

## Claims

1. A method of controlling voice broadcast, **characterized in that** the method comprises:
obtaining a current state information in response to activating a voice assistant;
generating a target control command in response to detecting the current state information being a predetermined state information; and
executing the target control command to perform a voice control on a voice broadcast of the voice assistant.

2. The method of claim 1, **characterized in that** the obtaining the current state information comprises:
detecting whether an audio equipment is connected;
while the audio equipment is connected, determining the current state information according to a volume information of the audio equipment; and
while the audio equipment is not connected, determining the current state information according to a volume information of an electronic device.

3. The method of claim 1, **characterized in that** the obtaining the current state information comprises:
collecting a current ambient characteristic information; and
determining a scene information according to the current ambient characteristic information and determining the current state information according to the scene information.

4. The method of claim 3, **characterized in that** the ambient characteristic information comprises a position characteristic information and a time characteristic information, and the determining the scene information according to the current ambient characteristic information comprises:
determining a position range according to the position characteristic information;
determining a time range according to the time characteristic information; and
determining the scene information according to the position range and the time range.

5. The method of any one of claims 1-4, **characterized in that** the executing the target control command to perform the voice control on the voice broadcast of the voice assistant comprises:
while the audio equipment is connected, executing the target control command to perform a mute control on the voice broadcast of the voice assistant corresponding to the audio equipment; and
while the audio equipment is not connected, executing the target control command to perform a mute control on the voice broadcast of the voice assistant corresponding to the electronic device.

6. The method of claim 5, **characterized in that** the executing the target control command to perform the mute control on the voice broadcast of the voice assistant corresponding to the audio equipment comprises:
detecting whether a current state is a handheld state;
in response to detecting the current state being the handheld state, executing the target control command to perform the mute control on the voice broadcast of the voice assistant corresponding to the audio equipment; and
in response to detecting the current state being not the handheld state, executing the target control command to perform the mute control on the voice broadcast of the voice assistant corresponding to the audio equipment and to turn on the voice broadcast of the voice assistant corresponding to the electronic device.

7. The method of claim 1, **characterized in that** the method further comprises:
in response to a preset operation command, canceling the control on the voice broadcast of the voice assistant.

8. A voice broadcast control device, comprising:
an obtaining unit, configured to obtain a current state information in response to activating a voice assistant;
a generating unit, configured to generate a target control command in response to detecting the current state information being a predetermined state information; and
a control unit, configured to execute the target control command to perform a voice control on a voice broadcast of the voice assistant.

9. The voice broadcast control device of claim 8, **characterized in that** the obtaining unit is further configured to detect whether an audio equipment is connected; while the audio equipment is connected, to determine the current state information according to a volume information of the audio equipment; and while the audio equipment is not connected, to determine the current state information according to a volume information of an electronic device.

10. The voice broadcast control device of claim 8, **characterized in that** the obtaining unit is further configured to collect a current ambient characteristic information, to determine a scene information according to the current ambient characteristic information and to determine the current state information according to the scene information.

11. The voice broadcast control device of claim 10, **characterized in that** the ambient characteristic information comprises a position characteristic information and a time characteristic information, and the obtaining unit is further configured to determine a position range according to the position characteristic information, to determine a time range according to the time characteristic information, and to determine the scene information according to the position range and the time range.

12. The voice broadcast control device of any one of claims 8-11, **characterized in that** the control unit comprises:
a first control sub-unit, configured to execute the target control command to perform a mute control on the voice broadcast of the voice assistant corresponding to the audio equipment; and
a second control sub-unit, configured to execute the target control command to perform a mute control on the voice broadcast of the voice assistant corresponding to the electronic device.

13. A storage medium, storing computer procedures executed by a computer to perform the method of claim 1.

14. An electronic device, comprising:
a memory, configured to store computer procedures; and
a processor, configured to execute the computer procedures to perform operations comprising:
obtaining a current state information in response to activating a voice assistant;
generating a target control command in response to detecting the current state information being a predetermined state information; and
executing the target control command to perform a voice control on a voice broadcast of the voice assistant.

15. The electronic device of claim 14, **characterized in that** the processor is further configured to execute the computer procedures to perform operations comprising:
detecting whether an audio equipment is connected;
while the audio equipment is connected, determining the current state information according to a volume information of the audio equipment; and
while the audio equipment is not connected, determining the current state information according to a volume information of an electronic device.

16. The electronic device of claim 14, **characterized in that** the processor is further configured to execute the computer procedures to perform operations comprising:
collecting a current ambient characteristic information; and
determining a scene information according to the current ambient characteristic information and determining the current state information according to the scene information.

17. The electronic device of claim 16, **characterized in that** the processor is further configured to execute the computer procedures to perform operations comprising:
determining a position range according to the position characteristic information;
determining a time range according to the time characteristic information; and
determining the scene information according to the position range and the time range.

18. The electronic device of claim 14, **characterized in that** the processor is further configured to execute the computer procedures to perform operations comprising:
while the audio equipment is connected, executing the target control command to perform a mute control on the voice broadcast of the voice assistant corresponding to the audio equipment; and
while the audio equipment is not connected, executing the target control command to perform a mute control on the voice broadcast of the voice assistant corresponding to the electronic device.

19. The electronic device of claim 18, **characterized in that** the processor is further configured to execute the computer procedures to perform operations comprising:
detecting whether a current state is a handheld state;
in response to detecting the current state being the handheld state, executing the target control command to perform the mute control on the voice broadcast of the voice assistant corresponding to the audio equipment; and
in response to detecting the current state being not the handheld state, executing the target control command to perform the mute control on the voice broadcast of the voice assistant corresponding to the audio equipment and to turn on the voice broadcast of the voice assistant corresponding to the electronic device.

20. The electronic device of claim 19, **characterized in that** the processor is further configured to execute the computer procedures to perform operations comprising:
in response to a preset operation command, canceling the control on the voice broadcast of the voice assistant.
